# FASCICULE DE BREVET EUROPEEN

(11) **EP 4 090 881 B1**
(45) Date de publication et mention de la délivrance du brevet: **29.05.2024**
(21) Numéro de dépôt: 20824227.1
(22) Date de dépôt: 14.12.2020
(51) Int. Cl.: F17C 13/08

(54) **DISPOSITIF ET PROCÉDÉ DE STOCKAGE ET DE TRANSFERT DE FLUIDE CRYOGÉNIQUE**
VORRICHTUNG UND VERFAHREN ZUM LAGERN UND ÜBERFÜHREN VON KRYOGENEM FLUID
DEVICE AND METHOD FOR STORING AND TRANSFERRING CRYOGENIC FLUID

(30) Priorité: 17.01.2020 FR 2000476
(43) Date de publication de la demande: 23.11.2022
(73) Titulaire: L'Air Liquide, Société Anonyme pour l'Etude et l'Exploitation des Procédés Georges Claude, 75007 Paris (FR)
(72) Inventeur: BERNHARDT, Jean-Marc, 38360 SASSENAGE (FR)
(74) Mandataire: Air Liquide
(86) Numéro de dépôt international: PCT/EP2020/085982
(87) Numéro de publication internationale: WO 2021/144095

(56) Documents cités:
- WO-A2-2016/075186
- KR-A- 20130 050 820

## Description

L'invention concerne un dispositif et un procédé de stockage et de transfert de fluide cryogénique.

L'invention concerne plus particulièrement un dispositif de stockage et de transfert de fluide cryogénique comprenant au moins un conteneur élémentaire comprenant un réservoir de gaz liquéfié, le réservoir étant muni d'une première conduite de transfert de fluide ayant une première extrémité raccordée à une extrémité supérieure du réservoir, le réservoir étant muni d'une seconde conduite de transfert de fluide ayant une première extrémité raccordée à une extrémité inférieure du réservoir, la première et la seconde conduite de transfert comprenant chacun un ensemble de vanne(s) respective(s).

L'invention concerne en particulier les réservoirs de stockage d'hydrogène ou d'hélium liquéfié.

Du fait de sa plus grande densité, l'hydrogène liquide est préféré à l'hydrogène gazeux lorsque de grandes quantités de produit doivent être transportées sur de grandes distances. Un autre avantage de l'hydrogène liquide est sa pureté puisqu'à à une température de 20K cela élimine de facto toutes les impuretés (solides à cette température) du gaz, ce qui optimise le fonctionnement des piles à combustible qui l'utilisent.

La faible densité de l'hydrogène liquide comparativement à l'eau par exemple limite la pression disponible par hauteur hydrostatique. Ainsi à basse température cela peut engendrer des pertes par évaporation assez importantes lors des transferts. Les systèmes de chargement de camions et les réservoirs des stations de fourniture d'hydrogène peuvent engendrer des pertes pouvant aller jusqu'à 15 % de la production.

Ces pertes par pressurisation des camions peuvent bien sûr être perdu au niveau de chaque station ou récupérées, réchauffées, re-comprimées et réinjectées dans le liquéfacteur, si on investit dans un système de recirculation des pertes et si on dimensionne en conséquence le système de liquéfaction.

Les principes de fonctionnement des stockages fixe ou mobiles sont identiques mais leur réalisation est différente du fait des différentes contraintes règlementaires et de performance.

Sur les stations-service, les stockages sont fixes et de taille imposée par le modèle choisi. L'évolution de sa taille en fonction de la fréquentation de la station n'est pas possible sans un chantier conséquent.

Les stockages mobiles sont conçus pour une maximisation de la charge utile mais sont parfois trop volumineux pour alimenter des stations-services dans les centres urbains. Ils ne sont pas facilement convertibles en stockage fixe temporaire pour des remplacements vide contre plein.

De plus, les temps de connections et de purge des stockages de gaz liquéfié mobiles avec les installations (liquéfacteur et/ou stations-services) sont généralement longs, complexes et nécessitent un personnel qualifié.

Pour la logistique, il est plus intéressant de transporter de grande quantité de gaz liquéfié dans le même véhicule mais pour la gestion des gaz de vaporisation («boil-off»), il est préférable de scinder les quantités afin de limiter les pressurisations successives. Le document KR 2013 0050820 décrit un dispositif selon l'art antérieur.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que la première conduite de transfert comprend deux branches formant deux secondes extrémités raccordées en parallèle à la première extrémité de la première conduite de transfert, les deux secondes extrémités de la première conduite de transfert étant munie chacune d'un raccord de connexion fluidique respectif, et en ce que la seconde conduite de transfert comprend deux branches formant deux secondes extrémités raccordées en parallèle à la première extrémité de la seconde conduite de transfert, les deux secondes extrémités de la seconde conduite de transfert étant munie chacune d'un raccord de connexion fluidique respectif.

Par ailleurs, des modes de réalisation de l'invention peuvent comporter l'une ou plusieurs des caractéristiques suivantes :
- la première conduite de transfert comprend une première vanne située à proximité de sa première extrémité et une seconde vanne situé au niveau d'une des deux secondes extrémités,
- la seconde conduite de transfert comprend une première vanne située à proximité de sa première extrémité et une seconde vanne (8) situé au niveau d'une des deux secondes extrémités,
- les raccords de connexion fluidique situés aux secondes extrémités des conduites de transfert sont des raccords de type à connexion rapide,
- le conteneur élémentaire comprend une troisième conduite de liaison ayant une première extrémité raccordée à l'extrémité supérieure du réservoir et une seconde extrémité raccordée à la partie inférieure du réservoir, ladite troisième conduite de liaison comprenant un ensemble de vanne(s),
- la première extrémité de la troisième conduite de liaison est reliée à la première extrémité de la première conduite de transfert,
- la seconde extrémité de la troisième conduite de liaison est reliée à la première extrémité de la seconde conduite de transfert,
- le dispositif comprend au moins deux conteneurs élémentaires raccordés fluidiquement l'un à l'autre,
- le dispositif comprend un premier conteneur élémentaire dont une seconde extrémité de la première conduite de transfert est raccordée à une seconde extrémité de la première conduite de transfert d'un second conteneur élémentaire, une seconde extrémité de la seconde conduite de transfert du premier conteneur élémentaire étant raccordée à une seconde extrémité de la seconde conduite de transfert du second conteneur élémentaire,
- le dispositif comprend un premier conteneur élémentaire dont une seconde extrémité de la première conduite de transfert est raccordée à une seconde extrémité de la seconde conduite de transfert d'un second conteneur élémentaire, une seconde extrémité de la seconde conduite de transfert du premier conteneur élémentaire étant raccordée à une seconde extrémité de la première conduite de transfert du second conteneur élémentaire.
- le dispositif comprend un réservoir mobile de transport de gaz liquéfié et un conteneur élémentaire dont une seconde extrémité de la première conduite de transfert est raccordée à une extrémité supérieure du réservoir mobile et dont une seconde extrémité de la seconde conduite de transfert dudit conteneur élémentaire est raccordée à une extrémité inférieure du réservoir mobile.

L'invention concerne également un procédé de stockage et transfert de fluide cryogénique au moyen d'un dispositif de stockage et de transfert de fluide selon l'une quelconque des caractéristiques ci-dessus ou ci-dessous, dans lequel le dispositif de stockage et de transfert de fluide comprend au moins un conteneur élémentaire dont le réservoir contient un gaz liquéfié en équilibre avec une phase gazeuse, le procédé comprenant au moins l'un parmi : une étape de soutirage de gaz du réservoir via une seconde extrémité de la première conduite de transfert, une étape de transfert de gaz liquéfié depuis une source de gaz liquéfié dans le réservoir via une seconde extrémité de la seconde conduite de transfert.

Selon d'autres particularités possibles :
- le procédé comprend une étape de transfert de gaz liquéfié depuis une source de gaz liquéfié dans le réservoir via une seconde extrémité de la seconde conduite de transfert, ladite source comprenant au moins l'un parmi : un liquéfacteur, un réservoir mobile de transport de gaz liquéfié.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant un exemple de structure et de fonctionnement d'un dispositif de stockage et de transfert comprenant un unique conteneur élémentaire,
[Fig. 2] représente une vue schématique et partielle illustrant un exemple de structure et de fonctionnement d'un dispositif de stockage et de transfert comprenant deux conteneurs élémentaires raccordés,
[Fig. 3] représente une vue schématique et partielle illustrant un exemple de la structure et du fonctionnement d'un dispositif de stockage et de transfert comprenant deux conteneurs de base non raccordés,
[Fig. 4] représente une vue schématique et partielle illustrant le dispositif de stockage et de transfert de la [Fig.2] raccordé à un réservoir mobile de livraison,
[Fig. 5] représente une vue schématique et partielle illustrant le dispositif de stockage et de transfert de la [Fig.2] avec une opération d'échange de l'un des deux conteneurs le composant,
[Fig. 6] représente une vue schématique et partielle illustrant un autre exemple de structure et de fonctionnement d'un dispositif de stockage et de transfert comprenant un unique conteneur élémentaire,

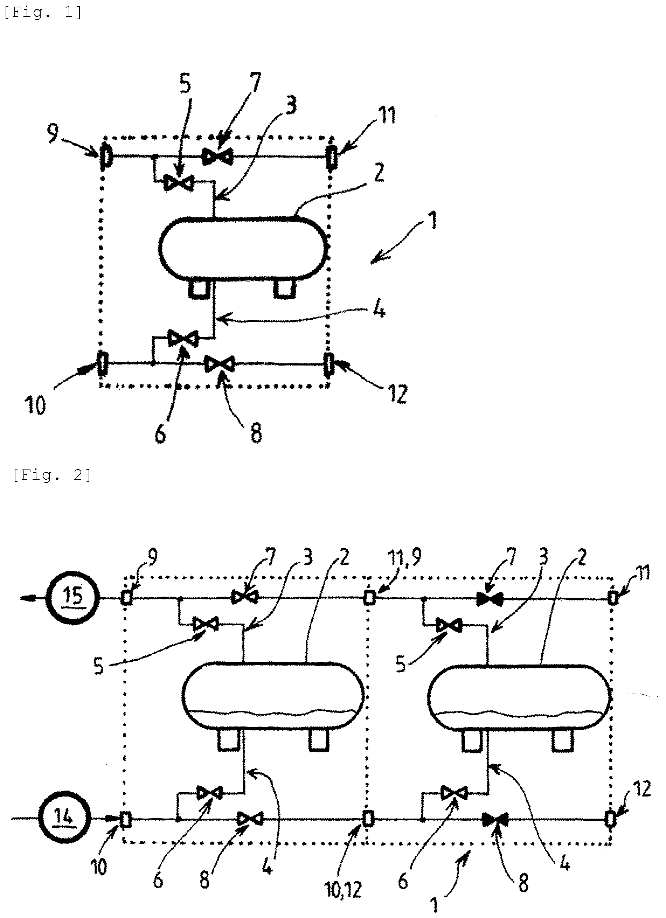

Le dispositif de stockage et de transfert de fluide cryogénique est composé d'un ou plusieurs conteneurs 1 élémentaires illustré à titre d'exemple à la [Fig. 1].

Le conteneur 1 élémentaire comprend de préférence un unique réservoir 2 de gaz liquéfié, par exemple un réservoir cryogénique à double enveloppe isolé sous vide. Ce réservoir 2 est muni d'une première conduite 3 de transfert de fluide ayant une première extrémité raccordée à une extrémité supérieure du réservoir 2 (c'est-dire dans la partie du réservoir qui abrite la phase gazeuse du fluide cryogénique stocké).

Cette première conduite 3 de transfert comprend, à l'opposé de la première extrémité, deux branches distinctes formant deux secondes extrémités. Ces deux secondes extrémités sont raccordées en parallèle à la première extrémité de la première 3 conduite de transfert.

C'est-à-dire que du fluide peut transiter d'une ou des deux secondes extrémités vers la phase gazeuse du réservoir 2 ou de la phase gazeuse du réservoir vers l'une ou les deux secondes extrémités.

Les deux secondes extrémités de la première conduite 3 de transfert sont munies chacune de préférence d'un raccord de connexion fluidique 9, 11 respectif.

Le réservoir 2 comprend en outre une seconde conduite 4 de transfert de fluide ayant une première extrémité raccordée à une extrémité inférieure du réservoir 2 (c'est-dire dans la partie du réservoir qui abrite la phase liquide du fluide cryogénique stocké).

La seconde conduite 4 de transfert comprend également deux branches formant deux secondes extrémités raccordées en parallèle à la première extrémité de la seconde conduite 4 de transfert. C'est-à-dire que du fluide peut transiter d'une ou des deux secondes extrémités vers la phase liquide du réservoir 2 ou de la phase liquide du réservoir vers l'une ou les deux secondes extrémités.

Les deux secondes extrémités de la seconde conduite 4 de transfert sont de préférence munies chacune d'un raccord de connexion fluidique 10, 12 respectif. Ces raccords de connexion fluidique 9, 10, 11, 12 situés aux secondes extrémités des conduites de transfert peuvent être des raccords de type à connexion rapide.

La première 3 et la seconde 4 conduite de transfert comprenant chacun un ensemble de vanne(s) respective(s) 4, 5, 6, 7 permettant, selon leur état ouvert ou fermé, de permettre ou non le transit de fluide entre deux secondes extrémités 9, 11 ou 10, 12 ou entre une ou plusieurs seconde extrémité 9, 11, 10, 12 et le réservoir 2. La ou les vannes sont par exemple des vannes d'isolation à commande manuelle ou pilotée. Ces vannes peuvent être ouvertes ou fermées pour autoriser ou non le transfert de fluide (remplissage ou soutirage). Ces vannes peuvent être du type à ouverture « tout ou rien » ou à ouverture progressive. Par exemple, la première conduite 3 de transfert peut comprend une première vanne 5 située à proximité de sa première extrémité et une seconde vanne 7 situé au niveau d'une des deux secondes extrémités.

En position fermée, la première vanne 5 située à proximité de sa première extrémité isole la partie supérieure du réservoir 2 par rapport aux deux secondes extrémités de la première conduite 3 de transfert. En position fermée, la seconde vanne 7 située à proximité d'une seconde extrémité 11 empêche le transit de fluide entre les deux secondes extrémités 9, 11 et entre la seconde extrémité concernée et le réservoir 2. Cette seconde vanne 7 permet le cas échant d'isoler la partie gazeuse du conteneur 1 élémentaire par rapport à un autre conteneur ou application extérieure.

De même, la seconde conduite 4 de transfert peut comprendre une première vanne 6 située à proximité de sa première extrémité et une seconde vanne 8 situé au niveau d'une des deux secondes extrémités.

En position fermée, la première vanne 6 située à proximité de sa première extrémité isole la partie inférieure du réservoir 2 par rapport aux deux secondes extrémités de la seconde conduite 4 de transfert. En position fermée, la seconde vanne 8 située à proximité d'une seconde extrémité 12 empêche le transit de fluide entre les deux secondes extrémités 10, 12 et entre la seconde extrémité concernée 12 et le réservoir 2. Cette seconde vanne 8 permet le cas échant d'isoler la partie liquide du conteneur 1 élémentaire par rapport à un autre conteneur 1 ou application extérieure.

Ceci forme un conteneur 1 élémentaire permettant une modularité du stockage de gaz liquéfié.

Cette architecture permet de raccorder plusieurs conteneurs 1 élémentaires permettant plusieurs combinaisons d'architectures distinctes en fonction des besoins (tailles des stations, chargement en parallèle, échange vide contre plein, ...).

Ceci permet en outre une solution simple pour déplacer/remplacer des stockages fixes de même architecture mais de tailles différentes.

L'architecture permet une connexion/déconnection rapide du ou des conteneurs 1 avec des sites de production ou une source (liquéfacteur par exemple) ou d'utilisation du gaz liquéfié (station-service par exemple).

De préférence le conteneur 1 modulaire est mobile et adapté à être transporté.

Comme illustré, cette architecture permet de connecter plusieurs conteneurs 1 élémentaires en série ou en parallèle.

Dans l'exemple de la [Fig. 2], le dispositif comprend un premier conteneur 1 élémentaire (à gauche) dont une seconde extrémité 11 de la première conduite 3 de transfert est raccordée à une seconde extrémité 9 de la première conduite 3 de transfert d'un second conteneur 1 élémentaire (à droite). De plus, une seconde extrémité 12 de la seconde conduite 4 de transfert du premier conteneur 1 élémentaire est raccordée à une seconde extrémité 10 de la seconde conduite 4 de transfert du second conteneur 1 élémentaire.

Les deux conteneurs 1 élémentaires peuvent ainsi être raccordés en parallèle à une source 14 et/ou un récepteur 15 raccordée(s) aux extrémités libres (à gauche) du premier conteneur 1 élémentaire.

Ainsi, avec les vannes 4, 5, 6, 7 du premier conteneur 1 élémentaire ouvertes, les premières vannes 5, 6 du second conteneur 1 élémentaire ouvertes (en blanc) et les secondes vannes 7, 8 du second conteneur 1 élémentaire fermées (en noir), les extrémités supérieures des deux réservoirs 2 peuvent être raccordées en parallèle à un récepteur 15 de gaz sous pression en vue, par exemple de récupérer du gaz sous pression pour abaisser la pression dans le ou les réservoirs 2. De plus, dans cette configuration, les extrémités inférieures des deux réservoirs 2 peuvent être raccordées en parallèle à une source 15 de liquide en vue par exemple de leur remplissage.

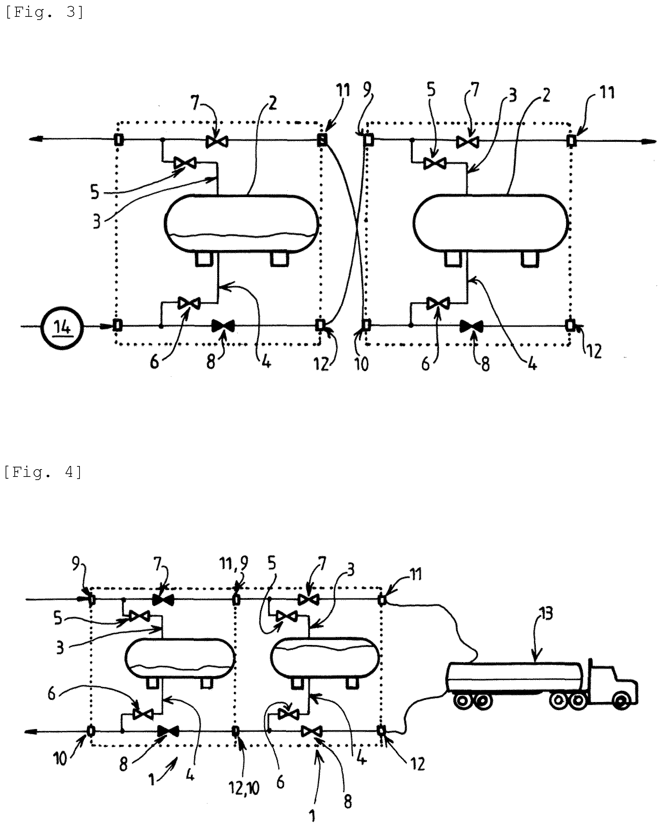

Dans l'exemple de la [Fig. 3], le dispositif comprend un premier conteneur 1 élémentaire (à gauche) dont une seconde extrémité 11 de la première conduite 3 de transfert est raccordée à une seconde extrémité 10 de la seconde conduite 4 de transfert d'un second conteneur 1 élémentaire (à droite). De plus, une seconde extrémité 12 de la seconde conduite 4 de transfert du premier conteneur 1 élémentaire est raccordée à une seconde extrémité 9 de la première conduite 3 de transfert du second conteneur 1 élémentaire.

Les secondes vannes 8 des secondes conduites 4 des deux conteneurs 1 sont fermées (en noir) tandis que les autres vannes 5, 6, 7 sont ouvertes (en blanc).

Les deux conteneurs 1 élémentaires peuvent ainsi être raccordés en série à une source et/ou un récepteur raccordée(s) aux extrémité libres (à gauche) du premier conteneur 1 élémentaire. La partie gazeuse du réservoir 2 du premier conteneur 1 élémentaire (à gauche) peut ainsi être raccordée à la partie liquide du réservoir 2 du second conteneur 1 élémentaire. Du gaz sous pression du réservoir 2 du premier conteneur 1 élémentaire peut ainsi être transféré dans la partie liquide du réservoir 2 du second conteneur 1 élémentaire.

De plus, du liquide fourni par une source 14 peut être transféré dans la partie liquide du réservoir 2 du premier conteneur 1 élémentaire, le gaz poussé par le liquide du premier conteneur 1 peut ainsi être transféré dans la partie liquide du réservoir 2 du second conteneur 1 élémentaire (via la seconde conduite 4 puis la première conduite 3 du premier conteneur 1 élémentaire puis via la seconde conduite 4 du second conteneur 1 élémentaire) . Ceci assure une mise en froid du réservoir 2 du second conteneur 1 élémentaire avec du gaz plutôt qu'avec du liquide.

Dans l'exemple de la [Fig. 4], le dispositif comprend un réservoir 13 mobile de transport de gaz liquéfié (par exemple un semi-remorque transportant du gaz liquéfié avec une phase gazeuse). Deux conteneurs 1 élémentaires sont raccordés selon l'agencement de la [Fig. 2].

Le second conteneur 1 élémentaire (à droite) a sa seconde extrémité 11 libre de sa première conduite 3 de transfert raccordée à une extrémité supérieure du réservoir 13 mobile et la seconde extrémité 12 libre de sa seconde conduite 4 de transfert raccordée à une extrémité inférieure du réservoir 13 mobile.

Les vannes 4, 5, 6, 7 du second conteneur 1 élémentaire (à droite) sont ouvertes (en blanc). Les secondes vannes 7, 8 du premier conteneur élémentaire (à gauche) sont fermées (en noir) tandis que les autres vannes 5, 6 du premier conteneur 1 élémentaires sont ouvertes (en blanc). Ceci permet de remplir en liquide le second conteneur 1 à partir du réservoir 13 mobile tout en assurant un équilibrage de pression avec le réservoir 13 mobile. De plus, simultanément ou non, du liquide peut être prélevé du réservoir 2 du premier conteneur 1 mobile vers un utilisateur via la seconde conduite 4 et du gaz sous pression peut être admis dans ce même réservoir (via la première conduite 3) .

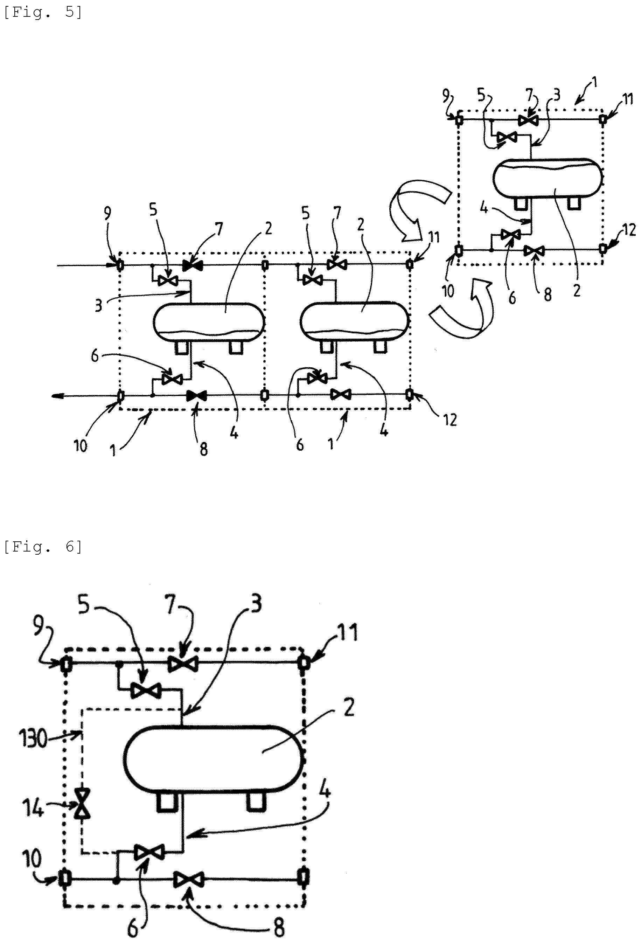

La [Fig. 6] représente une variante de réalisation possible du conteneur élémentaire. Celui-ci se distingue de celui de la [Fig. 1] uniquement en ce qu'il comprend en plus une troisième conduite 130 de liaison ayant une première extrémité raccordée à la partie supérieure du réservoir 2, par exemple via la première conduite 3 de transfert et une seconde extrémité raccordée à la partie inférieure du réservoir 2, par exemple via la seconde conduite 4 de transfert, cette troisième conduite 130 de liaison comprenant un ensemble de vanne(s) 14, par exemple une vanne. Comme illustré, la première extrémité de la troisième conduite 130 de liaison peut être reliée à la première extrémité de la première conduite 3 de transfert, par exemple entre la première vanne 5 et l'extrémité supérieure du réservoir 2. De même, la seconde extrémité de la troisième conduite 130 de liaison peut être reliée à la première extrémité de la seconde conduite 4 de transfert, par exemple entre la première vanne 6 et les deux secondes extrémités de cette seconde conduite 4 de transfert. Ceci permet de réaliser si besoin une liaison fluidique directe entre les extrémités supérieure et inférieure du réservoir 2 (via l'ouverture approprié des vannes correspondantes 14, 6). Cette troisième conduite 130 de liaison permet notamment de remplir ou soutirer le réservoir par le haut via la seconde conduite 4 de transfert et/ou de remplir ou soutirer par le bas du réservoir via la première conduite 3 de transfert. Ceci permet notamment de remplir par le haut le réservoir 2 sans changer de connexions. Les conteneurs élémentaires des [Fig. 1] et [Fig. 6] peuvent être associés en série ou en parallèle si besoin.

Dans l'exemple de la [Fig. 5], le dispositif comprend deux conteneurs 1 élémentaires sont raccordés selon l'agencement de la [Fig. 2]. Dans le cas où le réservoir 2 de l'un des deux conteneurs 1 est vide, il peut être remplacé en remplaçant le conteneur 1 en question par un conteneur 1 avec un réservoir 2 plein. Dans cet exemple le second conteneur 1 élémentaire (à droite) peut être remplacé en pilotant les vannes de façon appropriée. Par exemple, les secondes vannes 7, 8 du premier conteneur élémentaire (à gauche) peuvent être fermées (en noir) pour l'isoler du second conteneur 1 (à droite). Ce second conteneur 1 élémentaire peut être déconnecté du premier conteneur 1 et remplacé par un nouveau conteneur 1 élémentaire.

Ceci permet un remplacement d'un vide contre un plein dans la chaine des conteneurs 1 élémentaires reliés.

L'invention a été décrite dans des architectures à deux conteneurs 1 élémentaires, bien entendu d'autres architectures peuvent être envisagées notamment à trois ou plus de trois conteneurs 1 élémentaires.

## Revendications

1. Dispositif de stockage et de transfert de fluide cryogénique comprenant au moins un conteneur élémentaire comprenant un réservoir (2) cryogénique à double enveloppe de gaz liquéfié, le réservoir (2) étant muni d'une première conduite (3) de transfert de fluide ayant une première extrémité raccordée à une extrémité supérieure du réservoir (2), le réservoir (2) étant muni d'une seconde conduite (4) de transfert de fluide ayant une première extrémité raccordée à une extrémité inférieure du réservoir (2), la première (3) et la seconde (4) conduite de transfert comprenant chacun un ensemble de vanne(s) respective (s), et dans lequel la seconde conduite (4) de transfert comprend deux branches formant deux secondes extrémités raccordées en parallèle à la première extrémité de la seconde conduite (4) de transfert, les deux secondes extrémités de la seconde conduite (4) de transfert étant munie chacune d'un raccord de connexion fluidique (10, 12) respectif,
**caractérisé en ce que** la première conduite (3) de transfert comprend deux branches formant deux secondes extrémités raccordées en parallèle à la première extrémité de la première (3) conduite de transfert, les deux secondes extrémités de la première conduite (3) de transfert étant munie chacune d'un raccord de connexion fluidique (9, 11) respectif.

2. Dispositif selon la revendication 1, **caractérisé en ce que** la première conduite (3) de transfert comprend une première vanne (5) située à proximité de sa première extrémité et une seconde vanne (7) situé au niveau d'une des deux secondes extrémités.

3. Dispositif selon la revendication 1 ou 2, **caractérisé en ce que** la seconde conduite (4) de transfert comprend une première vanne (6) située à proximité de sa première extrémité et une seconde vanne (8) situé au niveau d'une des deux secondes extrémités.

4. Dispositif selon l'une quelconque des revendications 1 à 3, **caractérisé en ce que** les raccords de connexion fluidique (9, 10, 11, 12) situés aux secondes extrémités des conduites de transfert sont des raccords de type à connexion rapide.

5. Dispositif selon l'une quelconque des revendications 1 à 4, **caractérisé en ce que** le conteneur élémentaire comprend une troisième conduite (130) de liaison ayant une première extrémité raccordée à l'extrémité supérieure du réservoir et une seconde extrémité raccordée à la partie inférieure du réservoir (2), ladite troisième conduite (130) de liaison comprenant un ensemble de vanne(s) (14).

6. Dispositif selon la revendication 5, **caractérisé en ce que** la première extrémité de la troisième conduite (130) de liaison est reliée à la première extrémité de la première conduite (3) de transfert.

7. Dispositif selon la revendication 5 ou 6, **caractérisé en ce que** la seconde extrémité de la troisième conduite (130) de liaison est reliée à la première extrémité de la seconde conduite (4) de transfert.

8. Dispositif selon l'une quelconque des revendications 1 à 7, **caractérisé en ce qu'**il comprend au moins deux conteneurs (1) élémentaires raccordés fluidiquement l'un à l'autre.

9. Dispositif selon la revendications 1 à 8, **caractérisé en ce qu'**il comprend un premier conteneur (1) élémentaire dont une seconde extrémité (11) de la première conduite (3) de transfert est raccordée à une seconde extrémité (9) de la première conduite (3) de transfert d'un second conteneur (1) élémentaire et **en ce qu'**une seconde extrémité (12) de la seconde conduite (4) de transfert du premier conteneur (1) élémentaire est raccordée à une seconde extrémité (10) de la seconde conduite (4) de transfert du second conteneur (1) élémentaire.

10. Dispositif selon la revendications 1 à 8, **caractérisé en ce qu'**il comprend un premier conteneur (1) élémentaire dont une seconde extrémité (11) de la première conduite (3) de transfert est raccordée à une seconde extrémité (10) de la seconde conduite (4) de transfert d'un second conteneur (1) élémentaire et **en ce qu'**une seconde extrémité (12) de la seconde conduite (4) de transfert du premier conteneur (1) élémentaire est raccordée à une seconde extrémité (9) de la première conduite (3) de transfert du second conteneur (1) élémentaire.

11. Dispositif selon l'une quelconque des revendications 1 à 10, **caractérisé en ce qu'**il comprend un réservoir (13) mobile de transport de gaz liquéfié et un conteneur (1) élémentaire dont une seconde extrémité (11) de la première conduite (3) de transfert est raccordée à une extrémité supérieure du réservoir (13) mobile et dont une seconde extrémité (12) de la seconde conduite (4) de transfert dudit conteneur (1) élémentaire est raccordée à une extrémité inférieure du réservoir (13) mobile.

12. Procédé de stockage et transfert de fluide cryogénique au moyen d'un dispositif de stockage et de transfert de fluide selon l'une quelconque des revendications 1 à 11, dans lequel le dispositif de stockage et de transfert de fluide comprend au moins un conteneur (1) élémentaire dont le réservoir (2) contient un gaz liquéfié en équilibre avec une phase gazeuse, le procédé comprenant au moins l'un parmi : une étape de soutirage de gaz du réservoir (2) via une seconde extrémité de la première (3) conduite de transfert, une étape de transfert de gaz liquéfié depuis une source de gaz liquéfié dans le réservoir (2) via une seconde extrémité de la seconde (4) conduite de transfert.

13. Procédé selon la revendication 12, **caractérisé en ce qu'**il comprend une étape de transfert de gaz liquéfié depuis une source de gaz liquéfié dans le réservoir (2) via une seconde extrémité de la seconde (4) conduite de transfert, ladite source comprenant au moins l'un parmi : un liquéfacteur, un réservoir (13) mobile de transport de gaz liquéfié.

## Patentansprüche

1. Vorrichtung zum Lagern und Überführen von kryogenem Fluid, die mindestens einen elementaren Behälter aufweist, der einen doppelwandigen kryogenen Tank (2) für Flüssiggas aufweist, wobei der Tank (2) mit einer ersten Fluidüberführungsleitung (3) versehen ist, die ein erstes Ende hat, das mit einem oberen Ende des Tanks (2) verbunden ist, wobei der Tank (2) mit einer zweiten Fluidüberführungsleitung (4) versehen ist, die ein erstes Ende hat, das mit einem unteren Ende des Tanks (2) verbunden ist, wobei die erste Überführungsleitung (3) und die zweite Überführungsleitung (4) jeweils eine entsprechende Ventilanordnung aufweist und die zweite Überführungsleitung (4) zwei Zweige aufweist, die zwei zweite Enden bilden, die parallel mit dem ersten Ende der zweiten Überführungsleitung (4) verbunden sind, wobei die beiden zweiten Enden der zweiten Überführungsleitung (4) jeweils mit einem entsprechenden Fluidverbindungsanschluss (10, 12) versehen sind,
**dadurch gekennzeichnet, dass** die erste Überführungsleitung (3) zwei Zweige aufweist, die zwei zweite Enden bilden, die parallel mit dem ersten Ende der ersten Überführungsleitung (3) verbunden sind, wobei die beiden zweiten Enden der ersten Überführungsleitung (3) jeweils mit einem entsprechenden Fluidverbindungsanschluss (9, 11) versehen sind.

2. Vorrichtung nach Anspruch 1, **dadurch gekennzeichnet, dass** die erste Überführungsleitung (3) ein erstes Ventil (5) aufweist, das sich in der Nähe ihres ersten Endes befindet, und ein zweites Ventil (7), das sich an einem der beiden zweiten Enden befindet.

3. Vorrichtung nach Anspruch 1 oder 2, **dadurch gekennzeichnet, dass** die zweite Überführungsleitung (4) ein erstes Ventil (6) aufweist, das sich in der Nähe ihres ersten Endes befindet, und ein zweites Ventil (8), das sich an einem der beiden zweiten Enden befindet.

4. Vorrichtung nach einem der Ansprüche 1 bis 3, **dadurch gekennzeichnet, dass** die Fluidverbindungsanschlüsse (9, 10, 11, 12), die sich an den zweiten Enden der Überführungsleitungen befinden, Anschlüsse vom Typ Schnellkupplung sind.

5. Vorrichtung nach einem der Ansprüche 1 bis 4, **dadurch gekennzeichnet, dass** der elementare Behälter eine dritte Verbindungsleitung (130) aufweist, die ein erstes Ende hat, das mit dem oberen Ende des Tanks verbunden ist, und ein zweites Ende, das mit dem unteren Teil des Tanks (2) verbunden ist, wobei die dritte Verbindungsleitung (130) eine Ventilanordnung (14) aufweist.

6. Vorrichtung nach Anspruch 5, **dadurch gekennzeichnet, dass** das erste Ende der dritten Verbindungsleitung (130) mit dem ersten Ende der ersten Überführungsleitung (3) verbunden ist.

7. Vorrichtung nach Anspruch 5 oder 6, **dadurch gekennzeichnet, dass** das zweite Ende der dritten Verbindungsleitung (130) mit dem ersten Ende der zweiten Überführungsleitung (4) verbunden ist.

8. Vorrichtung nach einem der Ansprüche 1 bis 7, **dadurch gekennzeichnet, dass** sie mindestens zwei elementare Behälter (1) aufweist, die fluidmäßig miteinander verbunden sind.

9. Vorrichtung nach den Ansprüchen 1 bis 8, **dadurch gekennzeichnet, dass** sie einen ersten elementaren Behälter (1) aufweist, von dem ein zweites Ende (11) der ersten Überführungsleitung (3) mit einem zweiten Ende (9) der ersten Überführungsleitung (3) eines zweiten elementaren Behälters (1) verbunden ist, und dass ein zweites Ende (12) der zweiten Überführungsleitung (4) des ersten elementaren Behälters (1) mit einem zweiten Ende (10) der zweiten Überführungsleitung (4) des zweiten elementaren Behälters (1) verbunden ist.

10. Vorrichtung nach den Ansprüchen 1 bis 8, **dadurch gekennzeichnet, dass** sie einen ersten elementaren Behälter (1) aufweist, von dem ein zweites Ende (11) der ersten Überführungsleitung (3) mit einem zweiten Ende (10) der zweiten Überführungsleitung (3) eines zweiten elementaren Behälters (1) verbunden ist, und dass ein zweites Ende (12) der zweiten Überführungsleitung (4) des ersten elementaren Behälters (1) mit einem zweiten Ende (9) der ersten Überführungsleitung (4) des zweiten elementaren Behälters (1) verbunden ist.

11. Vorrichtung nach einem der Ansprüche 1 bis 10, **dadurch gekennzeichnet, dass** sie einen beweglichen Tank (13) zum Transport von Flüssiggas und einen elementaren Behälter (1) aufweist, von dem ein zweites Ende (11) der ersten Überführungsleitung (3) mit einem oberen Ende des beweglichen Tanks (13) verbunden ist und von dem ein zweites Ende (12) der zweiten Überführungsleitung (4) des elementaren Behälters (1) mit einem unteren Ende des beweglichen Tanks (13) verbunden ist.

12. Verfahren zum Lagern und Überführen von kryogenem Fluid mittels einer Vorrichtung zum Lagern und Überführen des Fluids nach einem der Ansprüche 1 bis 11, wobei die Vorrichtung zum Lagern und Überführen des Fluids mindestens einen elementaren Behälter (1) aufweist, dessen Tank (2) ein verflüssigtes Gas im Gleichgewicht mit einer Gasphase enthält, wobei das Verfahren mindestens einen der folgenden Schritte aufweist: einen Schritt des Abziehens von Gas aus dem Tank (2) über ein zweites Ende der ersten Überführungsleitung (3), eine Schritt des Überführens von verflüssigtem Gas von einer Flüssiggasquelle in den Tank (2) über ein zweites Ende der zweiten Überführungsleitung (4).

13. Verfahren nach Anspruch 12, **dadurch gekennzeichnet, dass** es einen Schritt des Überführens von Flüssiggas von einer Flüssiggasquelle im Tank (2) über ein zweites Ende der zweiten Überführungsleitung (4) aufweist, wobei die Quelle mindestens eines der folgenden Elemente aufweist: einen Verflüssiger, einen beweglichen Tank (13) zum Transport von Flüssiggas.

## Claims

1. Device for storing and transferring cryogenic fluid, comprising at least one basic container comprising a double-walled cryogenic tank (2) of liquefied gas, the tank (2) being provided with a first fluid transfer pipe (3) having a first end connected to an upper end of the tank (2), the tank (2) being provided with a second fluid transfer pipe (4) having a first end connected to a lower end of the tank (2), the first transfer pipe (3) and the second transfer pipe (4) each comprising a set of respective valves, and wherein the second transfer pipe (4) comprises two branches forming two second ends connected in parallel to the first end of the second transfer pipe (4), the two second ends of the second transfer pipe (4) each being provided with a respective fluidic connection fitting (10, 12), **characterized in that** the first transfer pipe (3) comprises two branches forming two second ends connected in parallel to the first end of the first transfer pipe (3), the two second ends of the first transfer pipe (3) each being provided with a respective fluidic connection fitting (9, 11).

2. Device according to Claim 1, **characterized in that** the first transfer pipe (3) comprises a first valve (5) situated in the vicinity of its first end and a second valve (7) situated at one of the two second ends.

3. Device according to Claim 1 or 2, **characterized in that** the second transfer pipe (4) comprises a first valve (6) situated in the vicinity of its first end and a second valve (8) situated at one of the two second ends.

4. Device according to any one of Claims 1 to 3, **characterized in that** the fluidic connection fittings (9, 10, 11, 12) situated at the second ends of the transfer pipes are fittings of the quick-connection type.

5. Device according to any one of Claims 1 to 4, **characterized in that** the basic container comprises a third connecting pipe (130) having a first end connected to the upper end of the tank and a second end connected to the lower part of the tank (2), said third connecting pipe (130) comprising a set of valves (14).

6. Device according to Claim 5, **characterized in that** the first end of the third connecting pipe (130) is connected to the first end of the first transfer pipe (3).

7. Device according to Claim 5 or 6, **characterized in that** the second end of the third connecting pipe (130) is connected to the first end of the second transfer pipe (4).

8. Device according to any one of Claims 1 to 7, **characterized in that** it comprises at least two basic containers (1) fluidically connected to one another.

9. Device according to Claims 1 to 8, **characterized in that** it comprises a first basic container (1), a second end (11) of the first transfer pipe (3) of which is connected to a second end (9) of the first transfer pipe (3) of a second basic container (1), and **in that** a second end (12) of the second transfer pipe (4) of the first basic container (1) is connected to a second end (10) of the second transfer pipe (4) of the second basic container (1).

10. Device according to Claims 1 to 8, **characterized in that** it comprises a first basic container (1), a second end (11) of the first transfer pipe (3) of which is connected to a second end (10) of the second transfer pipe (4) of a second basic container (1), and **in that** a second end (12) of the second transfer pipe (4) of the first basic container (1) is connected to a second end (9) of the first transfer pipe (3) of the second basic container (1).

11. Device according to any one of Claims 1 to 10, **characterized in that** it comprises a mobile tank (13) for transporting liquefied gas and a basic container (1), a second end (11) of the first transfer pipe (3) of which is connected to an upper end of the mobile tank (13) and wherein a second end (12) of the second transfer pipe (4) of said basic container (1) is connected to a lower end of the mobile tank (13).

12. Method for storing and transferring cryogenic fluid by means of a device for storing and transferring fluid according to any one of Claims 1 to 11, wherein the device for storing and transferring fluid comprises at least one basic container (1), the tank (2) of which contains a liquefied gas in equilibrium with a gas phase, the method comprising at least one of: a step of withdrawing gas from the tank (2) via a second end of the first transfer pipe (3), and a step of transferring liquefied gas from a liquefied gas source in the tank (2) via a second end of the second transfer pipe (4).

13. Method according to Claim 12, **characterized in that** it comprises a step of transferring liquefied gas from a liquefied gas source in the tank (2) via a second end of the second transfer pipe (4), said source comprising at least one of: a liquefier, and a mobile tank (13) for transporting liquefied gas.
